# EUROPÄISCHE PATENTSCHRIFT

(11) **EP 3 768 454 B1**
(45) Veröffentlichungstag und Bekanntmachung des Hinweises auf die Patenterteilung: **13.10.2021**
(21) Anmeldenummer: 19720910.9
(22) Anmeldetag: 06.05.2019
(51) Int. Cl.: B23K 9/02, B23K 9/095, B23K 9/173, B23K 31/12

(54) **VERFAHREN ZUR AUTOMATISCHEN ERMITTLUNG OPTIMALER SCHWEISSPARAMETER FÜR DIE DURCHFÜHRUNG EINER SCHWEISSUNG AN EINEM WERKSTÜCK**
METHOD FOR AUTOMATICALLY DETERMINING OPTIMAL WELDING PARAMETERS FOR WELDING ON A WORKPIECE
PROCÉDÉ DE DÉTERMINATION AUTOMATIQUE DE PARAMÈTRE DE SOUDURE OPTIMAL DESTINÉ À EFFECTUER UN SOUDAGE D'UNE PIÈCE À USINER

(30) Priorität: 07.05.2018 EP 18171040
(43) Veröffentlichungstag der Anmeldung: 27.01.2021
(73) Patentinhaber: FRONIUS INTERNATIONAL GmbH, 4643 Pettenbach (AT)
(72) Erfinder: SCHÖRGHUBER, Manfred, 4643 Pettenbach (AT); MÖRTENDORFER, Bernhard, 4643 Pettenbach (AT); ANGERMAYR, Daniel, 4643 Pettenbach (AT); ENNSBRUNNER, Helmut, 4643 Pettenbach (AT)
(74) Vertreter: SONN Patentanwälte OG
(86) Internationale Anmeldenummer: PCT/EP2019/061539
(87) Internationale Veröffentlichungsnummer: WO 2019/215079

(56) Entgegenhaltungen:
- EP-A1- 2 580 017
- EP-A1- 3 269 487
- EP-A2- 1 415 755

## Beschreibung

Die Erfindung betrifft ein Verfahren zur automatischen Ermittlung optimaler Schweißparameter für die Durchführung einer Schweißung an einem Werkstück.

Schweißprozesse sind oftmals sehr komplexe Vorgänge, da Schweißprozesse zur Vornahme einer Schweißung auf Werkstückoberflächen operieren, deren Geometrie sich beinahe bei jeder Schweißaufgabe unterscheidet. Zudem wirken eine Vielzahl von Schweißparametern, wie Schweißstrom, Material des Werkstücks, Drahtfördergeschwindigkeit und Material des Schweißdrahts, um nur einige zu nennen, auf den Schweißprozess ein. Des Weiteren besitzen Schweißprozesse eine stark bewegungsabhängige Komponente, d.h. der Anstellwinkel und Arbeitswinkel des Schweißbrenners, die Schweißgeschwindigkeit, die Werkstücklage etc. beeinflussen den Schweißprozess.

Das Auffinden und Einstellen optimaler Schweißparameter und Korrekturparameter ist eine schwierige Aufgabe, welche mit viel Zeitaufwand von Spezialisten und/oder Probenaufwand verbunden ist. Meist werden die Schweißparameter intuitiv gefunden oder einfach festgelegt und stellen kein Optimum dar, was die Möglichkeiten einer Schweißung für eine bestimmte Schweißaufgabe in einer bestimmten Schweißposition betrifft, sondern vielmehr einen Kompromiss. Üblicherweise werden heutzutage Experten damit beauftragt, für bestimmte Schweißaufgaben an bestimmten Werkstücken optimale Schweißparameter aufzufinden und festzulegen. Nach diesen zeit- und kostenaufwändigen Schritten wird die Schweißung an diesem Werkstück mit diesen festgelegten Schweißparametern durchgeführt. Werden Mängel am verschweißten Werkstück festgestellt oder verändern sich bestimmte Voraussetzungen, wie z.B. Werkstückgeometrien, dann muss der Prozess des Auffindens optimaler Schweißparameter für die Erzielung optimaler Schweißergebnisse wieder neu gestartet werden, was wiederum mit zusätzlichen Kosten und Wartezeiten verbunden ist.

Beispielsweise beschreibt die WO 2018/011243 A1 ein Verfahren zur Festlegung von Schweißparametern für einen Schweißprozess, bei dem ohne Zutun von Experten Schweißprozesse entlang beliebiger Schweißbahnen parametriert werden können, indem die Schweißparameter für den jeweiligen Schweißprozess anhand von idealen Schweißparametern, welche unter Testbedingungen an Testwerkstücken aufgenommen und gespeicherten wurden, durch Interpolation festgelegt werden. Somit können die Schweißparameter für bestimmte Werkstückgeometrien automatisch aus vorher definierten idealen Schweißparametern zusammengefügt werden, ohne dass der Schweißer diesbezüglich tätig werden muss. Dabei wurden die idealen Schweißparameter an den Testwerkstücken für eine bestimmte zu lösende Schweißaufgabe festgelegt. Derartige Aufgaben können jedoch je nach Anforderung sehr stark variieren, weshalb diesem Verfahren Grenzen gesetzt sind.

Die EP 1 415 755 A2 beschreibt ein Laserschweißüberwachungssystem und -verfahren, welches gegenüber herkömmlichen sehr komplexen Systemen zur Qualitätsbeurteilung von Schweißnähten, einfacher sein soll. Es wird eine Methode beschrieben, bei der für einen Abgleich von Sensorsystemen die Qualität einer Schweißnaht durch entsprechende Kombination von Sensorsignalen einfacher beurteilt wird. Dabei werden Testschweißungen verwendet, um das Sensorsystem zu kalibrieren.

Die Aufgabe der vorliegenden Erfindung besteht darin, ein oben genanntes Verfahren zur automatischen Ermittlung optimaler Schweißparameter bereitzustellen, durch welches auch ohne Spezialisten oder Experten automatisch optimale Schweißparameter für eine bestimmte Schweißung zur Erzielung einer optimalen Schweißqualität und optimaler Schweißbedingungen aufgefunden werden können. Das Verfahren soll möglichst einfach und rasch durchführbar sein. Nachteile bisheriger Verfahren sollen reduziert oder vermieden werden.

Gelöst wird die erfindungsgemäße Aufgabe dadurch, dass
- mehrere Testschweißungen an Testwerkstücken entlang Testschweißbahnen durchgeführt werden, und bei jeder Testschweißung zumindest ein Schweißparameter automatisch von einem vorgegebenen Anfangswert zu einem vorgegebenen Endwert in Abhängigkeit der Stelle entlang der Testschweißbahn verändert wird,
- jede resultierende Testschweißnaht entlang der Testschweißbahn mit zumindest einem Sensor vermessen wird, und zumindest ein Sensorsignal in Abhängigkeit der Stelle entlang der Testschweißnaht aufgenommen wird,
- aus zumindest einem Sensorsignal mindestens ein jede Testschweißnaht charakterisierender Qualitätsparameter berechnet wird,
- aus dem zumindest einen Qualitätsparameter ein Gütefunktional zur Charakterisierung der Güte der Testschweißnähte in Abhängigkeit der veränderten Schweißparameter berechnet wird,
- ein Optimum des Gütefunktionals ermittelt wird, und aus diesem ermittelten Optimum des Gütefunktionals die jeweiligen Optima der Qualitätsparameter ermittelt werden, und aus den Optima der Qualitätsparameter aus den Sensorsignalen jene Stellen als optimale Stellen entlang der Testschweißnaht identifiziert werden, bei welchen das Schweißergebnis der Testschweißung nach dem jeweiligen Qualitätsparameter optimal ist, und die Schweißparameter an diesen als optimal identifizierten Stellen der Testschweißnähte als Werte für die optimalen Schweißparameter für die Durchführung der Schweißung am Werkstück festgelegt und gespeichert werden.

Das erfindungsgemäße Verfahren sieht also vor, dass für eine bestimmte Schweißaufgabe zur Erzielung einer optimalen Schweißqualität und optimalen Schweißbedingungen automatisch optimale Schweißparameter aufgefunden werden, ohne dass die direkte Beiziehung eines Experten oder Spezialisten erforderlich ist. Demgemäß sieht das Verfahren vor, dass automatisch eine Reihe von Testschweißungen an Testwerkstücken unter vorgegebenen Bedingungen durchgeführt wird, bei denen die für die Lösung der jeweiligen Schweißaufgabe relevanten Schweißparameter variiert werden und aus der Beurteilung der resultierenden Testschweißnähte entlang der Testschweißbahnen jene Stellen entlang der Testschweißbahn identifiziert werden, bei welchen das Schweißergebnis der Testschweißung optimal ist. Um die Testschweißnähte charakterisieren zu können, werden Qualitätsparameter eingeführt, welche je nach Schweißaufgabe unterschiedlich definiert sein können. Beispielsweise können für sichtbare Schweißnähte an einem Werkstück Qualitätsparameter, wie z.B. die Nahtdicke, Nahtschuppung, Nahtbreite, etc., wichtiger oder ausschlaggebend sein, wohingegen bei anderen Schweißaufgaben andere Qualitätsparameter, wie z.B. die Nahtüberhöhung, der Nahtübergangswinkel, oder dgl., im Vordergrund stehen können. Auch die indirekte Vermessung der Testschweißnähte über die Erfassung von Parametern der Schweißstromquelle quasi über interne Stromquellen-Sensoren ist möglich. Zur leichteren Handhabbarkeit der komplexen und mehrdimensionalen Zusammenhänge zwischen den Schweißparametern wird aus den die Schweißnähte charakterisierenden Qualitätsparametern entsprechend der jeweiligen Schweißaufgabe ein sog. Gütefunktional berechnet, welches die Güte der Testschweißnähte in Abhängigkeit der veränderten Schweißparameter charakterisiert. Mit dem Gütefunktional wird eine einfach handhabbare reelle Zahl in Abhängigkeit sämtlicher Qualitätsparameter zur Charakterisierung der Qualität der Testschweißnähte geschaffen, aus der mit relativ einfachen Methoden ein Optimum ermittelt werden kann. Aus diesem Optimum des Gütefunktionals oder Gütekriteriums können dann die optimalen Qualitätsparameter und daraus die Stellen an den Testschweißnähten mit optimalen Qualitätseigenschaften und daraus die jeweiligen optimalen Schweißparameter festgelegt und gespeichert werden. Natürlich können mehr Optima des Gütefunktionals existieren, aus denen ein bestimmtes Optimum als Basis für die Ermittlung der optimalen Schweißparameter ausgewählt wird. Mit diesen optimalen Schweißparametern wird dann die Schweißung am Werkstück vorgenommen und es wird automatisch eine optimale Schweißqualität unter optimalen Schweißbedingungen erzielt. Das erfindungsgemäße Verfahren verlagert das Wissen der Experten und Spezialisten auf dem Gebiet der Schweißtechnik in die Qualitätsparameter zur Charakterisierung der Testschweißnähte und die Berechnung eines Gütefunktionals zur Charakterisierung der Güte der Testschweißnähte, sodass automatisch für die Erfüllung bestimmter Schweißaufgaben die dafür notwendigen optimalen Schweißparameter rasch und einfach aufgefunden werden können. Somit können die optimalen Schweißparameter für bestimmte Schweißungen an bestimmten Werkstücken rascher und ohne direkte Einbeziehung entsprechender Experten festgelegt werden. Bei Veränderungen der Schweißaufgabe kann ebenfalls rasch und mit geringeren Kosten auf Veränderungen reagiert werden und es können die optimalen Schweißparameter schneller festgelegt bzw. korrigiert werden. Für die Durchführung des Verfahrens sind entsprechende Vorrichtungen zur automatischen Bewegung des Schweißbrenners und bzw. oder des Testwerkstücks in Form eines Schweißroboters oder dgl. und eine entsprechende Steuerung mithilfe eines Computers erforderlich. Für die automatische Vermessung der Testschweißnähte der Testschweißbahnen sind der jeweiligen Schweißaufgabe entsprechend bestimmte Sensoren erforderlich, welche die Sensorsignale zur Berechnung der Qualitätsparameter liefern. Auch interne Sensoren, welche Parameter der Schweißstromquelle während der Durchführung der Testschweißung aufnehmen, können Daten für die Beurteilung der Testschweißnähte liefern. Die anschließenden Verarbeitungen der umfangreichen Daten erfolgt anhand entsprechender Berechnungsvorschriften und bzw. oder Tabellen.

Gemäß einem Merkmal der Erfindung werden die Testschweißbahnen vor Durchführung der Testschweißungen vermessen. Durch eine derartige Vermessung der Testschweißbahnen an den Testwerkstücken vor Durchführung der Testschweißungen wird sichergestellt, dass die Testschweißbahnen die gleichen Ausgangssituationen haben und somit die Bedingungen immer gleich sind. Dadurch wird eine Reproduzierbarkeit der Daten und eine Vergleichbarkeit gewährleistet. Die Vermessung der Testschweißbahnen kann unter Zuhilfenahme geeigneter Sensoren erfolgen.

Zur Beurteilung der Testschweißnähte entlang der Testschweißbahnen können diese während oder nach Durchführung der Testschweißungen vermessen werden. Die Testschweißnähte werden mit geeigneten Sensoren oder dgl., die auch direkt am Schweißbrenner oder in der Stromquelle angeordnet sein können, beurteilt bzw. abgetastet oder gescannt, sodass die Eigenschaften der hergestellten Testschweißnähte entlang der Testschweißbahnen erfasst werden können. Während der Durchführung der Testschweißung kann mithilfe geeigneter Sensoren, wie z.B. Lasersensoren oder Sensoren zur Erfassung der Strahlungsemissionen, das Schmelzbad unmittelbar nach der Testschweißung beobachtet werden. Alternativ oder zusätzlich kann die Testschweißnaht natürlich auch nach dem Erstarren des Schmelzbades untersucht und nach verschiedensten Gesichtspunkten beurteilt werden. Aber auch mit Schweißgeräteinternen Sensoren kann die Stabilität der Testschweißung und somit indirekt die Qualität der Testschweißnaht beurteilt werden.

Vorzugsweise wird bei jeder Testschweißung zumindest einer der Schweißparameter Drahtfördergeschwindigkeit eines abschmelzenden Schweißdrahtes, Schweißgeschwindigkeit, freie Schweißdrahtlänge, Anstellwinkel des Schweißbrenners (Winkel längs zur Schweißnaht), Arbeitswinkel des Schweißbrenners (Winkel quer zur Schweißnaht) und Tool Center Point des Schweißbrenners in Abhängigkeit der Stellen entlang der Testschweißbahn verändert. Bei den aufgelisteten Schweißparametern handelt es sich um jene Parameter, welche die Schweißnaht und Schweißqualität maßgeblich beeinflussen. In Abhängigkeit der jeweiligen Schweißaufgabe und des jeweiligen zu bearbeitenden Werkstücks können jedoch auch andere oder weitere Parameter wichtig sein und bei den Testschweißungen verändert werden. Die Bewertung der Stabilität der Schweißung stellt beispielsweise auch ein wichtiges Kriterium für die Beurteilung der Schweißqualität und der zu lösenden Schweißaufgabe dar. Die Stabilität kann durch interne Erfassung der Parameter der Schweißstromquelle einfach ermittelt werden.

Gemäß einem weiteren Merkmal der Erfindung werden die Testschweißungen entlang von vorgegebenen Testschweißbahnen mit konstantem Tangentialvektor, insbesondere entlang von geraden Testschweißbahnen mit einer Länge von vorzugsweise 10 cm bis 50 cm, durchgeführt. Neben der Lage des Testwerkstücks hat auch die Form der Testschweißbahn Einfluss auf die Durchführung der Testschweißung. Bei konstantem Tangentialvektor ist die Krümmung der Testschweißbahn konstant. Es handelt sich also vorzugsweise um eine gerade Testschweißbahn oder eine Testschweißbahn in Form eines Kreises. Die angegebene bevorzugte Länge erlaubt eine Veränderung des jeweiligen Schweißparameters in üblichen Grenzen und danach eine ausreichend genaue Beurteilung einer Veränderung der Qualität der Testschweißnaht entlang der Testschweißbahn. Natürlich können mehrere Parametersuchläufe an nur einem Testwerkstück vorgenommen werden und entlang einer Testschweißbahn hintereinander verschiedene Schweißparameter von einem Anfangswert zu einem Endwert verändert werden oder es werden je Schweißparameter eigene Testwerkstücke mit nur einer Testschweißbahn verwendet.

Wenn die Testschweißungen an ebenen Testwerkstücken, welche vorzugsweise in Position der jeweiligen Schweißaufgabe angeordnet sind, durchgeführt werden, ist ein rascher und einfacher Ablauf der Testschweißungen möglich. Durch die Verwendung ebener Testwerkstücke kann der Einfluss der Erdbeschleunigung auf das Testwerkstück konstant gehalten werden. Im einfachsten Fall kann die Anordnung der Testwerkstücke auch horizontal sein. Wenn die Lage des Testwerkstücks auf die jeweilige Schweißaufgabe universell sein soll, können auch mehrere Testschweißungen an Testwerkstücken in verschiedenen Lagen, also mit verschiedener Anordnung gegenüber dem Erdbeschleunigungsvektor, durchgeführt werden und bei der Festlegung der Qualitätsparameter berücksichtigt werden.

Die Testschweißnähte entlang der Testschweißbahn können mithilfe nicht zerstörender Messmethoden, beispielsweise optischen Sensoren, insbesondere Laserscanner, Kameras oder dgl., Röntgensensoren und bzw. oder Temperatursensoren vorzugsweise während der Durchführung der Testschweißung vermessen werden. Ein Scannen der Testschweißnähte entlang der Testschweißbahn der Testwerkstücke mit berührungslosen Sensoren hat den Vorteil, dass die Vermessung der Testschweißnähte besonders rasch und entlang der gesamten Testschweißbahn vorgenommen werden kann. Bei bestimmten Einflussfaktoren kann es von Vorteil sein, die Vermessung der Testschweißnähte unmittelbar nach der Testschweißung vorzunehmen. Beispielsweise kann der Temperaturverlauf im Material des Testwerkstücks unmittelbar nach Durchführung der Testschweißung eine Aussage über das Materialgefüge innerhalb und um der Testschweißnaht liefern. Bei anderen Qualitätsparametern der Testschweißnaht, wie z.B. der Nahtdicke, Nahtbreite, Nahtüberhöhung, dem Nahtübergangswinkel, der Einbrandkerbe oder Spritzermenge und Porenanzahl, kann es auch vorteilhaft sein, die Vermessung der Testschweißnaht erst einige Zeit nach der Durchführung der Testschweißung vorzunehmen.

Ebenso können die Testschweißnähte entlang der Testschweißbahn mit Hilfe zerstörender Messmethoden, beispielsweise durch Anfertigung von zumindest einem Schliffbild der Testschweißnaht an zumindest einem vorgegebenen Abstand entlang der Testschweißbahnen verarbeitet werden. Derartige naturgemäß aufwändigere Messmethoden können nur an wenigen Stellen entlang der Testschweißbahn durchgeführt werden, jedoch wesentliche Erkenntnisse auch über den inneren Aufbau der Testschweißnaht liefern, welche mit berührungslosen Messmethoden nicht erfasst werden könnten. Die Schliffbilder der Testschweißnaht an bestimmten Stellen entlang der Testschweißbahn können wiederum mit verschiedenen Verfahren analysiert werden, insbesondere mithilfe von Kameras und damit verbundenen Bildverarbeitungsverfahren. Der Einsatz bestimmter Chemikalien kann die Erkennung des Gefüges der Schliffbilder der Testschweißnaht verbessern. Auch eine makroskopische Untersuchung von Schliffbildern nach dem Schweißen kann charakteristische Qualitätsparameter liefern. Die Schliffbilder werden analysiert und in Form bestimmter Sensorsignale und in der Folge charakterisierender Qualitätsparameter die Qualität der Testschweißnaht in Abhängigkeit des jeweiligen Schweißparameters bzw. der jeweiligen Stelle entlang der Testschweißbahn ermittelt und gespeichert. Je nach Schweißaufgabe wird dieser Qualitätsparameter entsprechend beurteilt und in der Folge festgelegt, wo bzw. mit welchem Schweißparameter das optimale Schweißergebnis unter Berücksichtigung dieser Aufgabe erfüllt wird. Neben der Herstellung von Schliffbildern sind auch Zugprüfungen, Biegeprüfungen etc. an den Testwerkstücken denkbar.

Bei jeder Testschweißung wird vorzugsweise zumindest ein Schweißparameter vom vorgegebenen Anfangswert zum vorgegebenen Endwert linear in Abhängigkeit der Stelle entlang der Testschweißbahn auf einer vorgegebenen Länge variiert. Diese Methode erleichtert einerseits die Durchführung der Testschweißung und andererseits die Rückrechnung auf den jeweiligen als optimal angesehenen Schweißparameter bei Festlegung jener Stelle entlang der Testschweißbahn, der die Testschweißnaht in Bezug auf die gestellte Schweißaufgabe das optimale Ergebnis geliefert hat. Natürlich ist es auch möglich, anstelle der Festlegung eines vorgegebenen Anfangswerts und vorgegebenen Endwerts des Schweißparameters auch nur einen Anfangswert vorzugeben und eine bestimmte Änderungsrate festzulegen anstatt eines Endwerts. Beispielsweise kann der Anstellwinkel mit einem bestimmten Anfangswert zu Beginn der Testschweißbahn festgelegt werden und mit einer Änderungsrate von beispielsweise 1 °/cm der Testschweißnaht über eine Länge von 40 cm angehoben werden. Die Variation der Schweißparameter kann insbesondere bei größeren Parameterbereichen natürlich auch in Stufen erfolgen, um zu erzielen, dass das System sich einschwingen kann. Die nachfolgende Analyse der Testschweißungen bzw. Testschweißnähte findet dann vorzugsweise in jenen Bereichen statt, in denen das gesamte Schweißsystem eingeschwungen war.

Die Testschweißungen können unter verschiedenen Schweißbedingungen vorgenommen werden und die optimalen Schweißparameter für die Schweißung unter einer vorgegebenen Schweißbedingung durch Interpolation der optimalen Schweißparameter, welche bei Testschweißungen unter den für die vorgegebene Schweißbedingung angrenzenden Schweißbedingungen ermittelt wurden, vorgenommen wird. Wenn beispielsweise die Werkstücktemperatur einen Einfluss auf die durchzuführende Schweißung an dem Werkstück hat, können mehrere Testschweißungen an Testwerkstücken unter verschiedenen Werkstücktemperaturen als Schweißbedingung durchgeführt werden und es können die optimalen Schweißparameter unter Berücksichtigung der aktuellen Werkstücktemperatur (bzw. Umgebungstemperatur, wenn angenommen wird, dass das Werkstück die Umgebungstemperatur angenommen hat) vor Durchführung der Schweißung am Werkstück berücksichtigt werden. Nachdem praktisch nur eine endliche Anzahl an Testschweißungen unter verschiedenen Schweißbedingung vorgenommen werden kann, um den Aufwand gering zu halten, werden jene Testschweißungen unter jenen Schweißbedingungen für die Festlegung der optimalen Schweißparameter herangezogen, deren Schweißbedingungen unter- und oberhalb der realen Schweißbedingungen, beispielsweise unter- und oberhalb der möglichen Werkstücktemperatur bei der Durchführung der Schweißung, herangezogen und durch Interpolation der optimale Schweißparameter festgelegt werden. Neben dem genannten Beispiel der Werkstücktemperatur können weitere Schweißbedingung die Lage des Werkstücks, die Toleranzen der Nahtgeometrie um die Testschweißbahn oder die Toleranzen der Spaltbreite der Testschweißbahn sein.

Die Testschweißungen werden vorzugsweise unter zumindest zwei verschiedenen Schweißbedingungen jeweils der Werkstücktemperatur, der Lage des Testwerkstücks, der Nahtgeometrie an den Testwerkstücken oder der Spaltbreite durchgeführt. Um den Aufwand für die Durchführung der Testschweißungen gering zu halten, können diese nur unter einigen wenigen verschiedenen Schweißbedingungen festgelegt werden und eine Interpolation bei der jeweiligen Schweißbedingung vorgenommen werden. Vor Festlegung der optimalen Schweißparameter durch Interpolation der Ergebnisse zweier verschiedener Testschweißungen unter zwei verschiedenen Schweißbedingungen kann eine Überprüfung erfolgen, ob die Interpolation funktioniert, indem eine Testschweißung mit den interpolierten Schweißparameter durchgeführt wird. Wenn das keine optimale Qualität ergibt, kann die Feinheit der verschiedenen Testschweißungen unter verschiedenen Schweißbedingungen erhöht werden und es können weitere Testschweißungen unter mehreren Schweißbedingungen durchgeführt werden. Dadurch kann verhindert werden, dass bei nichtlinearen Beziehungen zwischen Schweißparametern und der Schweißqualität durch lineare Interpolationen Schweißparameter entstehen, welche zu einer Verletzung der Qualitätskriterien führen.

Vor der Durchführung der Interpolation wird vorzugsweise das Gütefunktional bei der vorgegebenen Schweißbedingung ermittelt und, wenn das Gütefunktional von einem Vorgabewert abweicht (d.h. die Qualitätskriterien nicht erfüllt werden), zumindest eine weitere Testschweißung bei einer weiteren Schweißbedingung vorgenommen. Durch diese automatische Maßnahme, welche ermittelt, ob das Gütefunktional verletzt wurde, kann verhindert werden, dass zwischen zu weit entfernten Schweißbedingungen eine lineare Interpolation der Schweißparameter durchgeführt wird, welche zu keinen optimalen Schweißparametern und somit einer schlechten Qualität der resultierenden Schweißnaht führen würde. Hierdurch kann quasi das Raster an durchzuführenden Testschweißungen unter verschiedenen Schweißbedingungen nachträglich automatisch verfeinert werden, wenn sich herausstellt, dass das ursprüngliche Raster zu grob gewählt wurde, also bei zu wenigen Schweißbedingungen Testschweißungen durchgeführt wurden.

Gemäß weiterer Merkmale der Erfindung wird die Breite, Höhe, Überhöhung, Unterwölbung, das Nahtfüllvolumen oder der Übergangswinkel der Testschweißnaht gescannt und aus diesen Sensorsignalen der Qualitätsparameter entlang der Testschweißbahn berechnet. Mithilfe der aufgelisteten Merkmale der Testschweißnaht kann für die meisten Schweißaufgaben die Testschweißnaht ausreichend gut beurteilt werden und somit ein Rückschluss auf einen optimalen Qualitätsparameter und somit die optimalen Schweißparameter mit ausreichender Genauigkeit durchgeführt werden. Beispielsweise ermöglicht der zurückgelegt Weg des Schweißbrenners, bei welchem der optimale Qualitätsparameter gefunden wird, die einfache Zuordnung und Übertragung des qualitätsbestimmenden Parameters aus bekanntem Start- und Endwert.

Das Optimum des Gütefunktionals kann durch sukzessives Verändern jeweils eines Schweißparameters zur Beeinflussung jeweils eines Qualitätsparameters ermittelt werden. Dies stellt eine Möglichkeit des Auffindens des Optimums bzw. eines Optimums des Gütefunktionals im mehrdimensionalen Raum dar, welches einfacher handhabbar ist, aber mehr Zeit in Anspruch nehmen kann.

Alternativ dazu kann das Optimum des Gütefunktionals auch durch gradientenweises Verändern mehrerer Schweißparameter zur Beeinflussung mehrerer Qualitätsparameter ermittelt werden. Auf diese Weise wird zwar der Rechenaufwand unter Umständen erhöht, das Ergebnis jedoch in kürzerer Zeit aufgefunden. Beim Optimum des Gütefunktionals handelt es sich in der Regel um das Maximum des Gütefunktionals bzw. ein Maximum des Gütefunktionals oder um ein Minimum des Gütefunktionals im Falle mehrerer Minima.

Die Erfindung wird anhand der beigefügten Zeichnungen noch näher erläutert.

Darin zeigen
- Fig. 1: eine schematische Übersichtsdarstellung eines Schweißprozesses;
- Fig. 2: eine Funktionsskizze des erfindungsgemäßen Verfahren zur automatischen Ermittlung optimaler Schweißparameter für die Durchführung einer Schweißung an einem Werkstück;
- Fig. 3: eine Abbildung eines Systems zur Durchführung des erfindungsgemäßen Verfahrens;
- Fig. 4: ein Blockschaltbild zur Veranschaulichung der Durchführung des erfindungsgemäßen Verfahrens;
- Fig. 5a-5c: verschiedene Methoden zur Vermessung von Testschweißnähten an Testwerkstücken;
- Fig. 6: ein Schnittbild durch ein verschweißtes Werkstück in Form einer Kehlnaht; und
- Fig. 7a-7c: die Verläufe einiger Eigenschaften der resultierenden Schweißnaht zur Veranschaulichung des Auffindens der optimalen Schweißparameter anhand eines Beispiels.

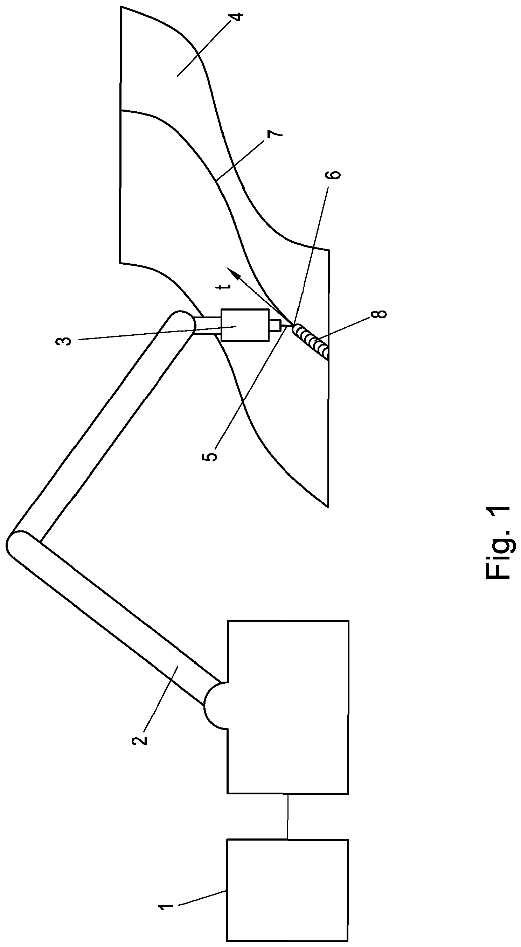

Fig. 1 zeigt eine schematische Übersichtsdarstellung eines Schweißprozesses, wobei ein Schweißsystem, das ein Schweißgerät 1, einen Prozessroboter 2 und einen Schweißbrenner 3 umfasst, der eine Schweißaufgabe an einem Werkstück 4 entsprechend löst. Demgemäß wird der Schweißbrenner 3 entlang einer vorgegebenen Schweißbahn 7 am Werkstück 4 geführt und zwischen der Kontaktdüse des Schweißbrenners 3 bzw. dem Ende des Schweißdrahts 5 und dem Werkstück 4 brennt ein Lichtbogen 6. Durch das Aufschmelzen des Materials der Werkstücke 4 und das Abschmelzen des Schweißdrahts 5 wird eine Schweißnaht 8 erzeugt. Alternativ oder zusätzlich zur Bewegung des Schweißbrenners 3 in Bezug zum Werkstück 4 kann auch das Werkstück 4 gegenüber dem Schweißbrenner 3 bewegt werden. Entscheidend ist eine Relativbewegung zwischen Schweißbrenner 3 und Werkstück 4 entlang der Schweißbahn 7. Für die Schweißung werden verschiedene Schweißprozesse durchgeführt und in Abhängigkeit der jeweiligen Lage und Anordnung des Werkstücks 4 sowie der Richtung der Schweißbahn 7, die dem Tangentialvektor t der Schweißbahn 7 entspricht, bestimmte Schweißparameter Pᵢ(x) eingestellt. Über diese Schweißparameter Pᵢ(x) werden die Schweißprozesse bzw. die Schweißung und damit die Schweißnaht 8 wesentlich beeinflusst. Von der jeweiligen Schweißaufgabe abhängig werden unterschiedliche Anforderungen an die Schweißnaht 8 gestellt. Beispielsweise kann die Schweißung über die Einstellung der Schweißparameter Pᵢ(x) für Schweißgeschwindigkeit, sichere Einbrandtiefe, schwingungsdynamische Anforderungen, aber auch eine optisch ansprechende Schweißnaht 8 optimiert werden. Somit gibt es für die Durchführung einer Schweißung an einem Werkstück 4 unter Berücksichtigung der jeweiligen Schweißaufgabe immer ein Set optimaler Schweißparameter P_{i,opt} (x), welche zu optimalen Schweißergebnissen führen. Das Auffinden derartiger optimaler Schweißparameter P_{i,opt}(x) ist eine sehr aufwändige Methode, welche üblicherweise Experten bzw. Spezialisten auf dem Gebiet der Schweißtechnik vorbehalten ist. Dementsprechend lang kann der Prozess des Auffindens optimaler Schweißparameter P_{i,opt}(x) dauern, was zu langen Wartezeiten und mitunter hohen Kosten führen kann. Darüber hinaus kann es vorkommen, dass zur Überbrückung derartiger Wartezeiten bis zum Auffinden optimaler Schweißparameter P_{i,opt} (x) Kompromisse eingegangen werden, die von unzureichender Schweißqualität gekennzeichnet sind. Es ist daher ein großes Anliegen, das Auffinden optimaler Schweißparameter P_{i,opt} (x) für bestimmte Schweißaufgaben bei der Durchführung von Schweißungen an Werkstücken 4 möglichst rasch und auch ohne direktes Beiziehen entsprechender Experten bzw. Spezialisten vornehmen zu können.

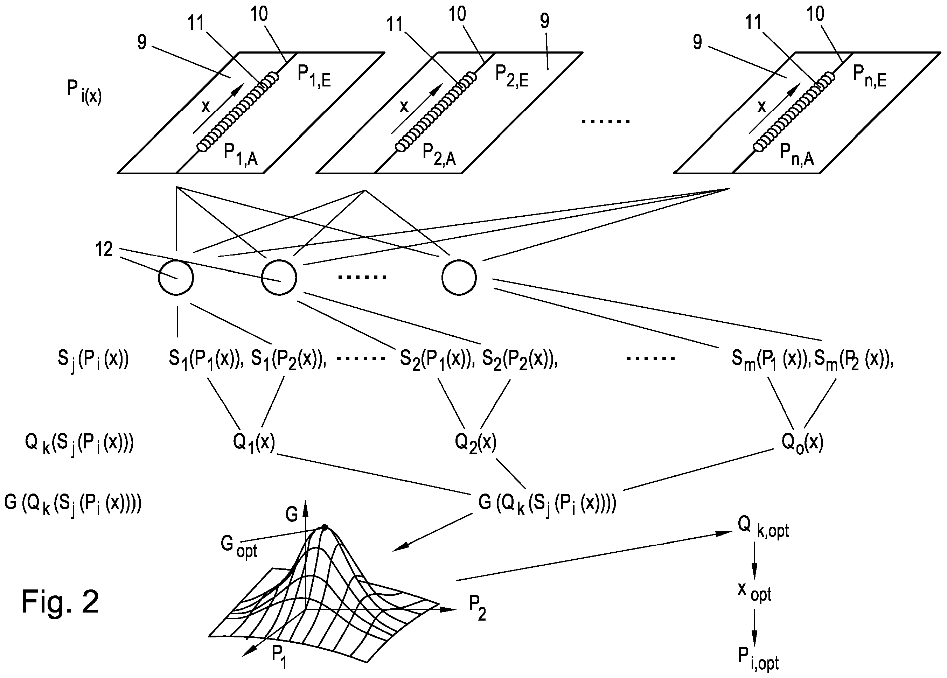

Fig. 2 zeigt eine Funktionsskizze des erfindungsgemäßen Verfahrens zur automatischen Ermittlung optimaler Schweißparameter P_{i,opt} (x) für die Durchführung einer Schweißung an einem Werkstück 4. Dementsprechend werden mehrere Testschweißungen an Testwerkstücken 9 entlang der Testschweißbahnen 10 durchgeführt und bei jeder Testschweißung zumindest ein Schweißparameter Pᵢ(x) automatisch von einem vorgegebenen Anfangswert P_{i,A} zu einem vorgegebenen Endwert P_{i,E} entlang der Testschweißbahn 10 verändert. Die Veränderung zwischen dem Anfangswert P_{i,A} und dem Endwert P_{i,E} des jeweiligen Schweißparameters Pᵢ (x) kann beispielsweise linear oder auch in bestimmten Stufen erfolgen, wobei der Zusammenhang zwischen dem Schweißparameter Pᵢ (x) und dem zurückgelegten Weg x entlang der Testschweißbahn 10 immer vorgegeben ist, sodass umgekehrt an jedem Ort x der Testschweißbahn 10 auf den dort eingestellten Schweißparameter Pᵢ (x) rückgeschlossen werden kann. Insbesondere bei Verwendung sehr einfacher Testwerkstücke 9 mit vorzugsweise geraden Testschweißbahnen 10 bzw. Testschweißbahnen 10 mit konstantem Tangentialvektor und einer anwendungsorientierten Anordnung der Testwerkstücke 9 resultieren sehr einfach und rasch durchführbare Testschweißungen und es ist nicht erforderlich, komplette Werkstücke bzw. Bauteile testweise zu verschweißten, was zu hohem Aufwand und Ausschuss führen würde.

Die resultierenden Testschweißnähte 11 entlang der Testschweißbahnen 10 der Testwerkstücke 9 werden mit entsprechenden Sensoren 12 vermessen, wobei diese Vermessung unmittelbar während der Durchführung der Testschweißung oder auch später durchgeführt werden kann. Neben Sensoren 12, welche die Testschweißnaht 11 berührungslos abtasten oder interne Sensoren, welche Parameter der Schweißstromquelle während der Durchführung der Testschweißung aufzeichnen, kommen auch Verfahren in Frage, bei denen die Testschweißnaht 11 unter Zerstörung des Testwerkstücks 9 analysiert wird. Beispielsweise können Schliffbilder der Testschweißnaht 11 an mehreren Stellen entlang der Testschweißbahn 10 angefertigt werden und beispielsweise mittels Bildverarbeitung verarbeitet werden.

Die Sensoren 12 liefern verschiedene Sensorsignale Sⱼ(Pᵢ(x)), welche zu mindestens einem die jeweilige Testschweißnaht 11 der Testwerkstücke 9 charakterisierenden Qualitätsparameter Qₖ(Sⱼ(Pᵢ(x))) verarbeitet werden. Die Art der Berechnung der Qualitätsparameter Qₖ(Sⱼ(Pᵢ(x))) aus den Sensorsignalen Sⱼ(Pᵢ(x)) hängt von der jeweiligen Schweißaufgabe ab und dem für die Erledigung der jeweiligen Schweißaufgabe charakteristischen Kriterium.

Zur leichteren Verarbeitung der Qualitätsparameter Qₖ(Sⱼ(Pᵢ(x))) wird ein Gütefunktional G(Qₖ(Sⱼ(Pᵢ(x)))) zur Charakterisierung der Güte der Testschweißnähte 11 in Abhängigkeit der veränderten Schweißparameter Pᵢ (x) berechnet. Somit resultiert mit dem Gütefunktional eine reelle Zahl im mehrdimensionalen Raum, die zumindest ein Optimum, insbesondere Maximum oder Minimum, aufweist, welches relativ einfach automatisierbar auffindbar ist. Wie in Fig. 2 skizziert, kann das Optimum Gₒₚₜ des Gütefunktionals G ein Maximum der Fläche in Abhängigkeit der Schweißparameter P₁ und P₂ sein. Durch entsprechende Berechnung kann dieses Optimum des Gütefunktionals Gₒₚₜ innerhalb bestimmter Grenzen im Parameterraum rasch aufgefunden werden. Aus diesem Optimum des Gütefunktionals Gₒₚₜ(Qₖ(Sⱼ(Pᵢ(x)))) werden die jeweiligen Optima der Qualitätsparameter Q_{k,opt} (Sⱼ(Pᵢ(x))) und aus den entsprechenden Stellen xₒₚₜ der Testschweißbahnen 10 schließlich die Werte für die jeweiligen optimalen Schweißparameter P_{i,opt} festgelegt und gespeichert. Mit diesen optimalen Schweißparametern P_{i,opt} wird die Schweißung am Werkstück 4 vorgenommen, resultierend in einer entsprechend der Schweißaufgabe optimalen Schweißqualität.

Im Gegensatz zu bisherigen bekannten Verfahren ist der direkte Einsatz von Experten bzw. Spezialisten der Schweißtechnik hier nicht erforderlich. Natürlich müssen jedoch derartige Experten und Spezialisten der Schweißtechnik für die Festlegung der Qualitätsparameter Qₖ(Sⱼ(Pᵢ(x))) und des Gütefunktionals G(Qₖ(Sⱼ(Pᵢ(x))) eingesetzt werden. Für bestimmte Schweißaufgaben an bestimmten Werkstücken mit bestimmten Werkstückgeometrien können jedoch zahlreiche Testschweißungen an Testwerkstücken 9 und zahlreiche Varianten von Qualitätsparametern und Gütefunktionalen festgelegt und in entsprechenden Datenbanken gespeichert werden und bei Zugriff darauf rasch für individuelle Schweißaufgaben optimale Schweißparameter P_{i,opt} automatisch festgelegt werden.

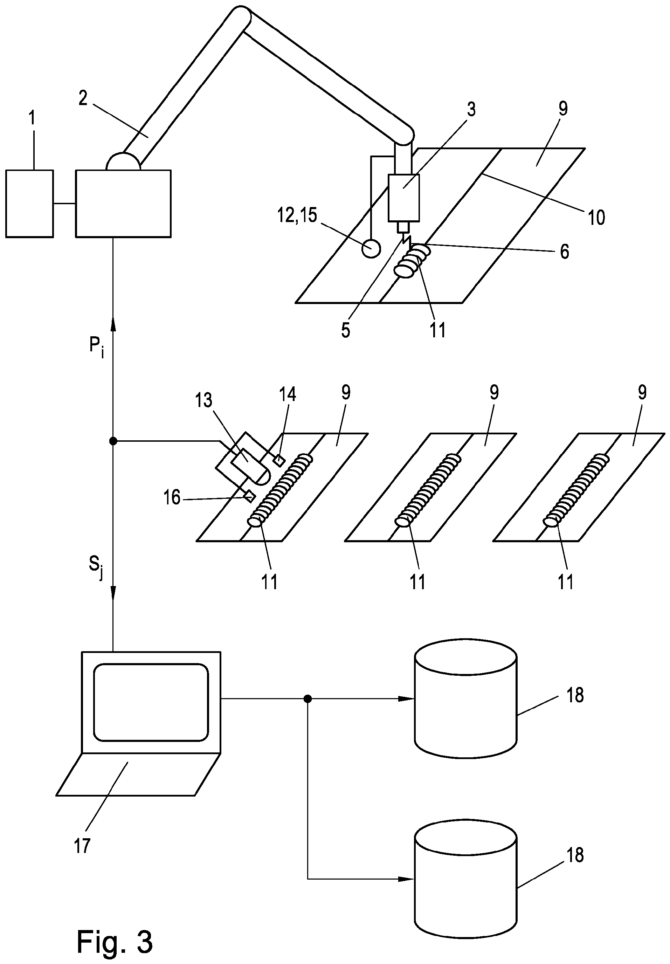

Fig. 3 zeigt eine Abbildung eines Schweißsystems zur Durchführung des erfindungsgemäßen Verfahrens. Mithilfe des Schweißgeräts 1 wird der am Prozessroboter 2 angeordnete Schweißbrenner 3 zur Durchführung von Testschweißungen an Testwerkstücken 9 entsprechend gesteuert. Über eine Steuereinrichtung 17 bzw. einen Computer wird das Schweißgerät 1 und der Prozessroboter 2 entsprechend angesteuert, sodass die Testschweißungen an entsprechenden Testwerkstücken 9 entlang vorgegebener Testschweißbahnen 10 durchgeführt werden können. Mithilfe geeigneter Sensoren 12 kann während der Durchführung der Testschweißung oder auch nach Durchführung der Testschweißung die Schweißnaht 11 entlang der Testschweißbahn 10 vermessen werden. Beispielsweise kommen als Sensoren 12 optische Sensoren 13, Röntgensensoren 14, Temperatursensoren 15 oder auch Wirbelstromsensoren 16 in Frage. Auch interne Sensoren können Parameter der Schweißstromquelle während der Durchführung der Testschweißung aufzeichnen. Die mit den Sensoren 12 aufgenommenen Sensorsignal Sⱼ(Pᵢ(x)) werden über die Steuereinrichtung 17 verarbeitet und in entsprechenden Speichern bzw. Datenbanken 18 abgelegt. Darüber hinaus werden entsprechend der jeweiligen Schweißaufgabe aus den Sensorsignalen Sⱼ(Pᵢ(x)) Qualitätsparameter Qₖ(Sⱼ(Pᵢ(x))) berechnet, welche die einzelnen Testschweißnähte 11 entsprechend charakterisieren. Nachdem entlang einer Testschweißnaht jeweils zumindest ein Schweißparameter Pᵢ(x) von einem Anfangswert P_{i,A} zu einem Endwert P_{i,E} verändert wird, existiert entlang der Testschweißnaht 11 ein Punkt bzw. Bereich, der optimale Eigenschaften aufweist. Diese optimalen Eigenschaften der Testschweißnaht 11 werden mithilfe der Sensoren 12 entsprechend erfasst und in der Steuereinrichtung 17 entsprechend verarbeitet. An jener Stelle entlang der Testschweißnaht 11, an der optimale Eigenschaften der Testschweißnaht festgestellt werden, kann auf den dort gültigen Parameter Pᵢ (x) rückgerechnet werden und dieser als optimal festgelegt und entsprechend gespeichert werden. Aus der Vielzahl an Testwerkstücken 9 und deren Testschweißnähte 11 und den Sensorsignalen Sⱼ(Pᵢ(x)) resultiert eine Vielzahl an Daten, welche in den Speichern bzw. Datenbanken 18 abgelegt sind. Die Datenbank 18 stellt quasi eine Wissensdatenbank dar, in der das Expertenwissen der in der Schweißtechnik kundigen Experten und Spezialisten strukturiert vorliegt und auf die für die Festlegung optimaler Schweißparameter P_{i,opt} zugegriffen werden kann.

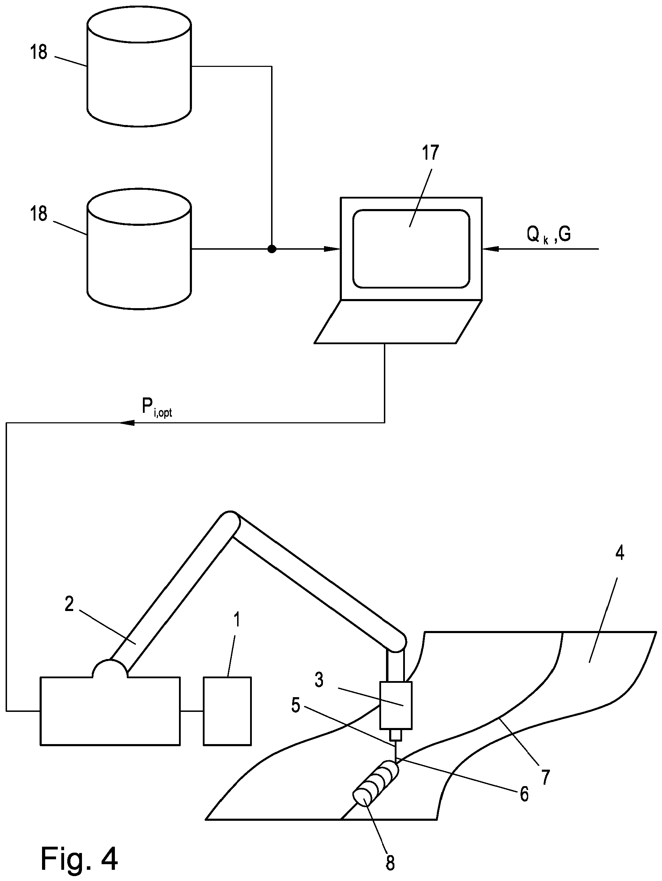

Fig. 4 zeigt das Prinzip des Auffindens der optimalen Schweißparameter P_{i,opt} aus diesen in den Datenbanken 18 gespeicherten Informationen. Dementsprechend wird die Steuereinrichtung 17 bzw. der Computer mit bestimmten Daten geladen, mit welchen eine bestimmte Schweißaufgabe zur Durchführung einer Schweißung an einem Werkstück 4 charakterisiert wird. Insbesondere werden das bestimmte Qualitätsparameter Qₖ und das Gütefunktional G als Funktion der Qualitätsparameter Qₖ sein oder es wird aus einer Vielzahl derartiger Qualitätsparameter Qₖ oder Gütefunktionalen G zumindest ein bestimmter Qualitätsparameter Qₖ bzw. ein bestimmtes Gütefunktional G ausgewählt. Aus den vorhandenen, von den Testschweißungen erhaltenen Informationen der Sensorsignale Sⱼ(Pᵢ(x)) kann über die oben beschriebene Prozedur des Auffindens des Optimums des Gütefunktionals Gₒₚₜ auf die jeweiligen optimalen Schweißparameter P_{i,opt} rückgerechnet werden. Diese optimalen Schweißparameter P_{i,opt} werden dann an das Schweißgerät 1 und den Prozessroboter 2 des Schweißsystems weitergeleitet und die Schweißung an dem Werkstück 4 entlang der Schweißbahn 7 mit diesen optimalen Schweißparametern P_{i,opt} durchgeführt, resultierend in einer Schweißnaht 8 mit optimalen Eigenschaften für die jeweilige zu lösende Schweißaufgabe.

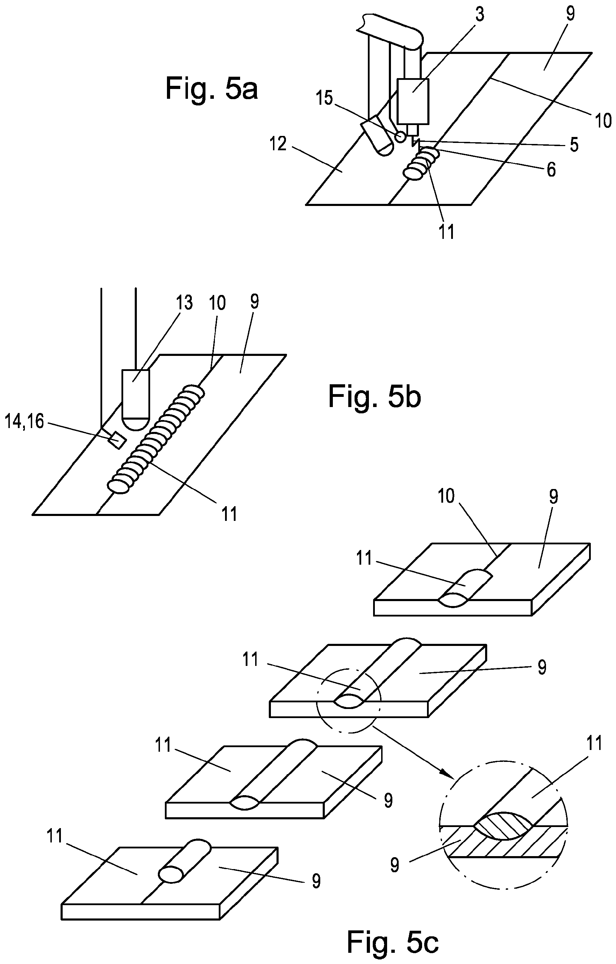

Die Fig. 5a bis 5c zeigen verschiedene Skizzen zur Veranschaulichung der Vermessung von Testschweißnähten 11 an Testwerkstücken 9. Fig. 5a zeigt ein Verfahren zum Vermessen der Testschweißnaht 11 während der Durchführung der Testschweißung, indem dem Schweißbrenner 3 nachgeordnet beispielsweise optische Sensoren 13 oder Temperatursensoren 15 angeordnet sind, welche die Schweißnaht 11 entsprechend abtasten und die gewonnenen Sensorsignale Sⱼ(x) in Abhängigkeit der Stelle entlang der Testschweißbahn 10 aufnehmen und weiterleiten.

Alternativ oder zusätzlich zu der obigen, in Fig. 5a dargestellten Methode kann gemäß Fig. 5b auch nachträglich das Testwerkstück 9 bzw. die Testschweißnaht 11 entlang der Testschweißbahn 10 vermessen werden, mithilfe von verschiedenen Sensoren, wie z.B. optischen Sensoren 13, Röntgensensoren 14 oder auch Wirbelstromsensoren 16, welche zu verschiedenen Qualitätsparametern über die Schweißnaht 11 führen können.

In Fig. 5c ist eine Methode skizziert, bei der das Testwerkstück 9 zur Analyse der Testschweißnaht 11 zerstört wird, indem an mehreren Stellen entlang der Testschweißbahn 10 Schliffbilder der Testschweißnaht 11 und des umgebenden Testwerkstücks 9 hergestellt werden. Diese Schnittbilder können mit entsprechenden Sensoren und bildverarbeitenden Methoden vermessen werden und Aufschluss über die Qualität der Testschweißnaht 11 geben. Wenn hinsichtlich der Erfüllung einer bestimmten Schweißaufgabe ein bestimmtes Schliffbild optimale Eigenschaften aufweist, beispielsweise optimale Einbrandtiefe oder dgl., kann der jeweilige an dieser Stelle der Testschweißnaht 11 verwendete Schweißparameter Pᵢ (x) identifiziert und als optimaler Schweißparameter P_{i,opt} festgelegt und gespeichert werden.

Die automatischen Verfahren zur Vermessung der Testschweißnähte 11 entlang der Testschweißbahnen 10 der Testwerkstücke 9 können unter Verwendung entsprechender Vorrichtungen automatisiert werden, sodass die Vielzahl an Daten, welche die Testschweißnähte 11 beurteilen können, rasch gefunden und gespeichert werden kann.

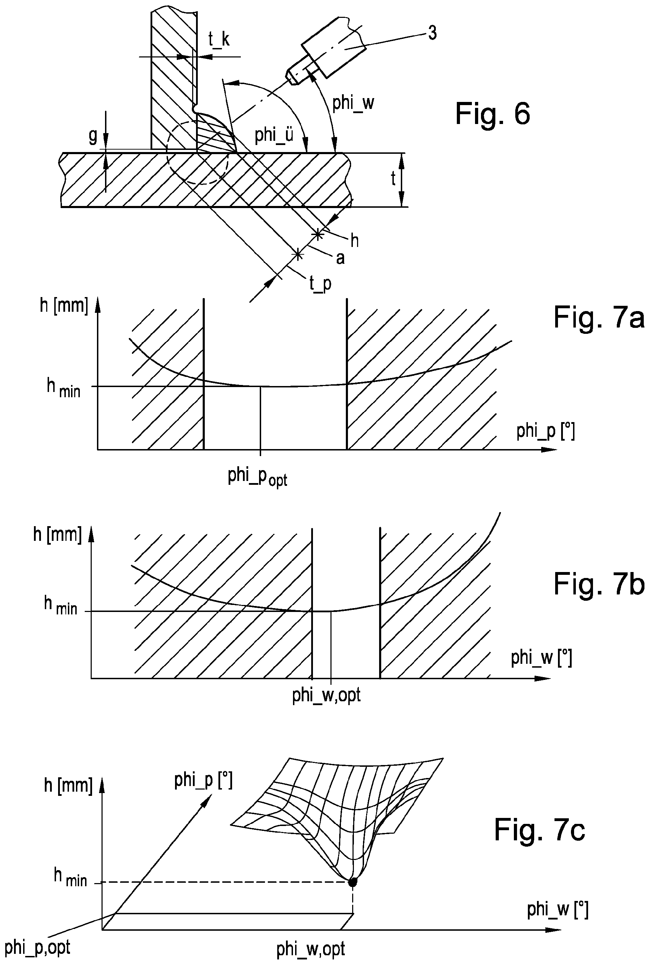

Fig. 6 zeigt ein Schnittbild durch ein verschweißtes Werkstück mit entsprechenden Parametern, welche die Werkstücke und die Schweißnaht entsprechend charakterisieren. Zu diesen Parametern zählen beispielsweise:
- t: Dicke der Werkstücke
- g: Spaltbreite zwischen den Werkstücken
- a: Schweißnahtdicke
- h: Nahtüberhöhung
- t_p: Einbrandtiefe
- t_k: Tiefe der Einbrandkerbe
- phi_ü: Nahtübergangswinkel
- phi_p: Anstellwinkel zwischen Schweißbrenner und Werkstück in Richtung der Schweißnaht (in Fig. 6 nicht dargestellt)
- phi_w: Arbeitswinkel zwischen Schweißbrenner und Werkstück in Richtung quer zur Schweißnaht

Neben diesen beispielhaft angeführten Parametern zur Charakterisierung einer Schweißnaht existieren noch viele andere Parameter, welche ebenfalls für die Durchführung des gegenständlichen Verfahrens herangezogen werden können und mit entsprechenden Sensoren aufgenommen werden können. Beispielsweise können die Spritzermenge, Bindefehler, die Anzahl von Poren in der Schweißnaht sowie die Reproduzierbarkeit als Schweißparameter genannt werden, welche die Schweißung charakterisieren können.

Die Fig. 7a-7c zeigen nun anhand eines Beispiels das Auffinden optimaler Schweißparameter für eine bestimmte Schweißaufgabe. In diesem Beispiel besteht die Aufgabe darin, die Nahtüberhöhung h einer Schweißnaht möglichst gering zu halten, indem der Anstellwinkel phi_p des Schweißbrenners gegenüber dem Werkstück und der Arbeitswinkel phi_w des Schweißbrenners entsprechend variiert und daraus die optimalen Parameter gewählt werden. Dementsprechend werden bei diesem Beispiel Testschweißungen vorgenommen, bei welchen der Anstellwinkel phi_p von einem Anfangswert zu einem Endwert entlang der Testschweißnaht von einem Testwerkstück geändert wird und bei einer weiteren Testschweißung der Arbeitswinkel phi_w von einem Anfangswert zu einem Endwert entlang der Testschweißbahn verändert wird. Die resultierenden Testschweißnähte an diesen Testwerkstücken werden vermessen und ein der Nahtüberhöhung h entsprechendes Sensorsignal aufgezeichnet. Somit resultieren Verläufe der Nahtüberhöhung h in Abhängigkeit des Anstellwinkels phi_p (Fig. 7a) und h in Abhängigkeit des Arbeitswinkels phi_w (Fig. 7b).

Nach Definition eines Gütefunktionals G in Abhängigkeit der Nahtüberhöhung h resultiert ein Flächenverlauf für die Nahtüberhöhung h in Abhängigkeit des Anstellwinkels phi_p und des Arbeitswinkels phi_w, wie im Diagramm der Fig. 7c skizziert. Das Gütefunktional G besitzt zumindest ein Optimum, im gegenständlichen Beispiel zumindest ein Minimum, welches einfach ermittelbar ist und eine Rückrechnung auf die optimalen Werte für den Anstellwinkel phi_p_{,opt} und den Arbeitswinkel phi_w,ₒₚₜ zulassen.

Bei realen Schweißungen werden mehr als zwei Schweißparameter variiert, resultierend in einer mehrdimensionalen Funktion des Gütefunktionals G in Abhängigkeit der jeweiligen variierbaren Schweißparameter Pᵢ(x).

Das gegenständliche Verfahren erlaubt ein rasches Auffinden idealer Schweißparameter P_{i,opt} aus einer Vielzahl an gesammelten Daten anhand von Testschweißungen, welche anhand von Testwerkstücken durchgeführt wurden, ohne dass entsprechende Experten oder Spezialisten auf dem Gebiet der Schweißtechnik unmittelbar beigezogen werden müssen.

## Patentansprüche

1. Verfahren zur automatischen Ermittlung optimaler Schweißparameter (P_{i,opt}) für die Durchführung einer Schweißung an einem Werkstück (4), wobei
- mehrere Testschweißungen an Testwerkstücken (9) entlang Testschweißbahnen (10) durchgeführt werden, und bei jeder Testschweißung zumindest ein Schweißparameter (Pᵢ(x)) automatisch von einem vorgegebenen Anfangswert (P_{i,A}) zu einem vorgegebenen Endwert (P_{i,E}) in Abhängigkeit der Stelle (x) entlang der Testschweißbahn (10) verändert wird,
- jede resultierende Testschweißnaht (11) entlang der Testschweißbahn (10) mit zumindest einem Sensor (12) vermessen wird, und zumindest ein Sensorsignal (Sⱼ(Pᵢ(x))) in Abhängigkeit der Stelle (x) entlang der Testschweißnaht (11) aufgenommen wird,
- aus zumindest einem Sensorsignal (Sⱼ(Pᵢ(x))) mindestens ein jede Testschweißnaht (11) charakterisierender Qualitätsparameter (Qₖ(Sⱼ(Pᵢ(x)))) berechnet wird,
- aus dem zumindest einen Qualitätsparameter (Qₖ(Sⱼ(Pᵢ(x)))) ein Gütefunktional (G(Qₖ(Sⱼ(Pᵢ(x))))) zur Charakterisierung der Güte der Testschweißnähte (11) in Abhängigkeit der veränderten Schweißparameter (Pᵢ(x)) berechnet wird,
- ein Optimum des Gütefunktionals (Gₒₚₜ(Qₖ(Sⱼ(Pᵢ(x)))) ermittelt wird, und aus diesem ermittelten Optimum des Gütefunktionals (Gₒₚₜ(Qₖ(Sⱼ(Pᵢ(x)))) die jeweiligen Optima der Qualitätsparameter (Q_{k,opt} (Sⱼ(Pᵢ(x))) ermittelt werden, und aus den Optima der Qualitätsparameter (Q_{k,opt} (Sⱼ(Pᵢ(x))) aus den Sensorsignalen (Sⱼ(Pᵢ(x))) jene Stellen (x) als optimale Stellen (xₒₚₜ) entlang der Testschweißnaht (11) identifiziert werden, bei welchen das Schweißergebnis der Testschweißung nach dem jeweiligen Qualitätsparameter (Qₖ(Sⱼ(Pᵢ(x))) optimal ist, und die Schweißparameter (Pᵢ(x)) an diesen als optimal identifizierten Stellen (xₒₚₜ) der Testschweißnähte (11) als Werte für die optimalen Schweißparameter (P_{i,opt}) für die Durchführung der Schweißung am Werkstück (4) festgelegt und gespeichert werden.

2. Verfahren nach Anspruch 1, **dadurch gekennzeichnet, dass** die Testschweißbahnen (10) vor Durchführung der Testschweißungen vermessen werden.

3. Verfahren nach Anspruch 1 oder 2, **dadurch gekennzeichnet, dass** die Testschweißnähte (11) entlang der Testschweißbahnen (10) während oder nach Durchführung der Testschweißungen vermessen werden.

4. Verfahren nach einem der Ansprüche 1 bis 3, **dadurch gekennzeichnet, dass** bei jeder Testschweißung zumindest einer der Schweißparameter (Pᵢ(x)) Drahtfördergeschwindigkeit (v_{D}(x)) eines abschmelzenden Schweißdrahtes (5), Schweißgeschwindigkeit (vₛ(x)), freie Schweißdrahtlänge, Anstellwinkel (phi_p(x)) des Schweißbrenners (3), Arbeitswinkel (phi_w(x)) des Schweißbrenners (3) und Tool Center Point (TCP(x)) des Schweißbrenners (3) in Abhängigkeit der Stellen (x) entlang der Testschweißbahn (10) verändert wird.

5. Verfahren nach einem der Ansprüche 1 bis 4, **dadurch gekennzeichnet, dass** die Testschweißung entlang von vorgegebenen Testschweißbahnen (10) mit konstantem Tangentialvektor (t), insbesondere entlang von geraden Testschweißbahnen (10) mit einer Länge (l) von vorzugsweise 10cm bis 50 cm, durchgeführt werden.

6. Verfahren nach einem der Ansprüche 1 bis 5, **dadurch gekennzeichnet, dass** die Testschweißungen an ebenen Testwerkstücken (9) durchgeführt werden.

7. Verfahren nach einem der Ansprüche 1 bis 6, **dadurch gekennzeichnet, dass** die Testschweißnähte (11) entlang der Testschweißbahn (10) mithilfe nicht zerstörender Messmethoden, beispielsweise optischen Sensoren (13), insbesondere Laserscanner, Kameras oder dgl., Röntgensensoren (14), und bzw. oder Temperatursensoren (15) vorzugsweise während der Durchführung der Testschweißung vermessen werden.

8. Verfahren nach einem der Ansprüche 1 bis 7, **dadurch gekennzeichnet, dass** die Testschweißnähte (11) entlang der Testschweißbahn (10) mithilfe zerstörender Messmethoden, beispielsweise durch Anfertigung von zumindest einem Schliffbild der Testschweißnaht (11) an zumindest einem vorgegebenen Abstand (xᵥ) entlang der Testschweißbahnen (10) verarbeitet wird.

9. Verfahren nach einem der Ansprüche 1 bis 8, **dadurch gekennzeichnet, dass** bei jeder Testschweißung zumindest ein Schweißparameter (Pᵢ(x)) vom vorgegebenen Anfangswert (P_{i,A}) zum vorgegebenen Endwert (P_{i,E}) linear in Abhängigkeit der Stelle (x) entlang der Testschweißbahn (10) auf einer vorgegebenen Länge (l) variiert wird.

10. Verfahren nach einem der Ansprüche 1 bis 9, **dadurch gekennzeichnet, dass** die Testschweißungen unter verschiedenen Schweißbedingungen (Bₗ) vorgenommen werden und die optimalen Schweißparameter (P_{i,opt}) für die Schweißung unter einer vorgegebenen Schweißbedingung (Bᵥ) durch Interpolation der optimalen Schweißparameter (P_{i,opt}), welche bei Testschweißungen unter den für die vorgegebene Schweißbedingung (Bᵥ) angrenzenden Schweißbedingungen (Bᵤ, Bₒ) ermittelt wurden, vorgenommen wird.

11. Verfahren nach Anspruch 10, **dadurch gekennzeichnet, dass** die Testschweißungen unter zumindest zwei verschiedenen Schweißbedingungen (Bₗ) jeweils der Werkstücktemperatur, Lage des Testwerkstücks (9), Öffnungswinkel der Testwerkstücke (9) um die Testschweißbahn (10) oder der Spaltbreite der Testschweißbahn (10) durchgeführt werden.

12. Verfahren nach Anspruch 10 oder 11, **dadurch gekennzeichnet, dass** vor der Durchführung der Interpolation das Gütefunktional G(Qₖ(Sⱼ(Pᵢ(x)))) bei der vorgegebenen Schweißbedingung (Bᵥ) ermittelt wird und, wenn das Gütefunktional G(Qₖ(Sⱼ(Pᵢ(x)))) von einem Grenzwert abweicht, zumindest eine weitere Testschweißung bei einer weiteren Schweißbedingungen (B_{z}) vorgenommen wird.

13. Verfahren nach einem der Ansprüche 1 bis 12, **dadurch gekennzeichnet, dass** die Breite, Höhe, Überhöhung, Unterwölbung, das Nahtfüllvolumen und bzw. oder der Übergangswinkel der Testschweißnaht (11) gescannt wird und aus diesen Sensorsignalen (Sⱼ(Pᵢ(x)) der Qualitätsparameter (Qₖ(Sⱼ(Pᵢ(x)) entlang der Testschweißbahn (10) berechnet wird.

14. Verfahren nach einem der Ansprüche 1 bis 13, **dadurch gekennzeichnet, dass** das Optimum des Gütefunktionals (Gₒₚₜ(Qₖ(Sⱼ(Pᵢ(x))) durch sukzessives Verändern jeweils eines Schweißparameters (Pᵢ(x)) zur Beeinflussung jeweils eines Qualitätsparameters (Qₖ(Sⱼ(Pᵢ(x)))) ermittelt wird.

15. Verfahren nach einem der Ansprüche 1 bis 13, **dadurch gekennzeichnet, dass** das Optimum des Gütefunktionals (Gₒₚₜ(Qₖ(Sⱼ(Pᵢ(x))) durch gradientenweises Verändern mehrerer Schweißparameter (Pᵢ(x)) zur Beeinflussung mehrerer Qualitätsparameter (Qₖ(Sⱼ(Pᵢ(x)))) ermittelt wird.

## Claims

1. A method for automatically determining optimum welding parameters (P_{i,opt}) for carrying out a weld on a workpiece (4), wherein
- a plurality of test welds are carried out on test workpieces (9) along test welding tracks (10), and at each test weld at least one welding parameter (Pᵢ(x)) is changed automatically along the test welding track (10) from a predefined initial value (P_{i,A}) to a predefined final value (P_{i,E}), depending on the location (x),
- each resulting test weld seam (11) is measured along the test welding track (10) with at least one sensor (12), and at least one sensor signal (Sⱼ(Pᵢ(x))) is received, depending on the location (x) along the test weld seam (11),
- at least one quality parameter (Qₖ(Sⱼ(Pᵢ(x)))) which characterizes each weld seam (11) is calculated from at least one sensor signal (Sⱼ(Pᵢ(x))),
- a quality functional (G(Qₖ(Sⱼ(Pⱼ(x))))) for characterizing the quality of the test weld seams (11) in accordance with the changed welding parameters (Pᵢ(x)) is calculated from the at least one quality parameter (Qₖ(Sⱼ(Pᵢ(x)))),
- an optimum of the quality functional (Gₒₚₜ(Qₖ(Sⱼ(Pᵢ(x)))) is ascertained, and from this determined optimum of the quality functional (Gₒₚₜ(Qₖ(Sⱼ(Pᵢ(x)))) the respective optima of the quality parameters (Qₖ,ₒₚₜ(Sⱼ(Pᵢ(x))) are determined, and from the optima of the quality parameters (Q_{k,opt}(Sⱼ(Pᵢ(x))) from the sensor signals (Sⱼ(Pᵢ(x))) those locations (x) are identified as optimum locations (xₒₚₜ) along the test weld seam (11) at which the welding result of the test weld is optimum according to the respective quality parameter (Qₖ(Sⱼ(Pᵢ(x))), and the welding parameters (Pᵢ(x)) at these locations (xₒₚₜ) of the test weld seams (11), identified as optimum, are defined as values for the optimum welding parameters (P_{i,opt}) for carrying out the welding on the workpiece (4), and saved.

2. The method according to Claim 1, **characterized in that** the test welding tracks (10) are measured before carrying out the test welds.

3. The method according to Claim 1 or 2, **characterized in that** the test weld seams (11) are measured along the test welding tracks (10) during or after carrying out the test welds.

4. The method according to one of Claims 1 to 3, **characterized in that** at each test weld at least one of the welding parameters (Pᵢ(x)) wire feed speed (v_{D}(x)) of a welding wire (5) which is to be melted off, welding speed (vₛ(x)), free welding wire length, angle of attack (phi_p(x)) of the welding torch (3), working angle (phi_w(x)) of the welding torch (3) and tool center point (TCP(x)) of the welding torch (3) is changed along the test welding track (10), depending on the locations (x).

5. The method according to one of Claims 1 to 4, **characterized in that** the test weld is carried out along predefined test welding tracks (10) with a constant tangential vector (t), in particular along straight test welding tracks (10) with a length (l) of preferably 10 cm to 50 cm.

6. The method according to one of Claims 1 to 5, **characterized in that** the test welds are carried out on flat test workpieces (9).

7. The method according to one of Claims 1 to 6, **characterized in that** the test weld seams (11) are measured along the test welding track (10) by means of non-destructive measurement methods, for example optical sensors (13), in particular laser scanners, cameras or suchlike, X-ray sensors (14), and/or temperature sensors (15) preferably during the carrying out of the test weld.

8. The method according to one of Claims 1 to 7, **characterized in that** the test weld seams (11) are processed along the test welding track (10) by means of destructive measurement methods, for example by the making of at least one micrograph of the test weld seam (11) at at least one predefined distance (xᵥ) along the test welding tracks (10).

9. The method according to one of Claims 1 to 8, **characterized in that** at each test weld at least one welding parameter (Pᵢ(x)) is varied from the predefined initial value (P_{i,A}) to the predefined final value (P_{i,E}) linearly along the test welding track (10) on a predefined length (1), depending on the location (x).

10. The method according to one of Claims 1 to 9, **characterized in that** the test welds are carried out under various welding conditions (Bₗ), and the optimum welding parameters (P_{i,opt}) for the welding under a predefined welding condition (Bᵥ) is carried out by interpolation of the optimum welding parameters (P_{i,opt}) which were determined at test welds under the bordering welding conditions (Bᵤ, Bₒ) for the predefined welding condition (Bᵥ).

11. The method according to Claim 10, **characterized in that** the test welds are carried out under at least two different welding conditions (Bₗ) respectively of the workpiece temperature, position of the test workpiece (9), opening angle of the test workpieces (9) around the test welding track (10) or the gap width of the test welding track (10).

12. The method according to Claim 10 or 11, **characterized in that** before the carrying out of the interpolation, the quality functional G(Qₖ(Sⱼ(Pᵢ(x)))) is determined at the predefined welding condition (Bᵥ) and, when the quality functional G(Qₖ(Sⱼ(Pᵢ(x)))) deviates from a threshold value, at least one further test weld is carried out at a further test welding condition (B_{z}).

13. The method according to one of Claims 1 to 12, **characterized in that** the width, height, superelevation, under-curvature, seam filling volume and/or the transition angle of the test weld seam (11) is scanned and from these sensor signals (Sⱼ(Pᵢ(x)) the quality parameter (Qₖ(Sⱼ(Pᵢ(x)) is calculated along the test welding track (10).

14. The method according to one of Claims 1 to 13, **characterized in that** the optimum of the quality functional (Gₒₚₜ(Qₖ(Sⱼ(Pᵢ(x))) is determined by successive changing respectively of a welding parameter (Pᵢ(x)) for influencing respectively a quality parameter (Qₖ(Sⱼ(Pᵢ(x)))).

15. The method according to one of Claims 1 to 13, **characterized in that** the optimum of the quality functional (Gₒₚₜ(Qₖ(Sⱼ(Pᵢ(x))) is determined by changing in terms of gradient several welding parameters (Pᵢ(x)) for influencing several quality parameters (Qₖ(Sⱼ(Pᵢ(x)))) .

## Revendications

1. Procédé de détermination automatique de paramètres de soudure optimaux (P_{i,opt}) pour réaliser une soudure sur une pièce (4), dans lequel
- plusieurs soudures de test sont réalisées sur des pièces de test (9) le long de chemins de soudure de test (10), et au moins un paramètre de soudure (Pᵢ(x)) est modifié automatiquement à chaque soudure de test pour passer d'une valeur initiale prédéterminée (P_{i,A}) à une valeur finale prédéterminée (P_{i,E}) en fonction de l'emplacement (x) le long du chemin de soudure de test (10),
- chaque cordon de soudure de test (11) ainsi formé le long du chemin de soudure de test (10) est mesuré à l'aide d'au moins un capteur (12), et au moins un signal de capteur (Sⱼ(Pᵢ(x))) est enregistré en fonction de l'emplacement (x) le long du cordon de soudure de test (11),
- au moins un paramètre de qualité (Qₖ(Sⱼ(Pᵢ(x)))) caractérisant chaque cordon de soudure de test (11) est calculé à partir d'au moins un signal de capteur (Sⱼ(Pᵢ(x))),
- une fonctionnelle de qualité (G(Qₖ(Sⱼ(Pᵢ(x))))) destinée à caractériser la qualité des cordons de soudure de test (11) en fonction des paramètres de soudure modifiés (Pᵢ(x)) est calculée à partir du ou des paramètres de qualité (Qₖ(Sⱼ(Pᵢ(x)))),
- un optimum de la fonctionnelle de qualité (Gₒₚₜ(Qₖ(Sⱼ(Pᵢ(x))))) est déterminé, et les optimums respectifs des paramètres de qualité (Q_{k,opt}(Sⱼ(Pᵢ(x)))) sont déterminés à partir de cet optimum déterminé de la fonctionnelle de qualité (Gₒₚₜ(Qₖ(Sⱼ(Pᵢ(x))))), et des emplacements (x) sont identifiés comme emplacements optimaux (xₒₚₜ) le long du cordon de soudure de test (11) à partir des optimums des paramètres de qualité (Q_{k,opt}(Sⱼ(Pₖ(x)))) calculés à partir des signaux de capteur (Sⱼ(Pᵢ(x))), le résultat de soudure de la soudure de test réalisée auxdits emplacements optimaux étant optimal à l'aune du paramètre de qualité considéré (Qₖ(Sⱼ(Pᵢ(x)))), et les paramètres de soudure (Pᵢ(x)) appliqués auxdits emplacements (xₒₚₜ) identifiés comme optimaux des cordons de soudure de test (11) sont établis et mémorisés comme paramètres de soudure optimaux (P_{i,opt}) pour la réalisation de la soudure sur la pièce (4).

2. Procédé selon la revendication 1, **caractérisé en ce que** les chemins de soudure de test (10) sont mesurés avant la réalisation des soudures de test.

3. Procédé selon la revendication 1 ou 2, **caractérisé en ce que** les cordons de soudure de test (11) le long des chemins de soudure de test (10) sont mesurés pendant ou après la réalisation des soudures de test.

4. Procédé selon l'une des revendications 1 à 3, **caractérisé en ce qu'**au moins un des paramètres de soudure (Pᵢ(x)) comprenant la vitesse d'apport (v_{D}(x)) d'un fil de soudure (5) consommable, la vitesse de soudure (vₛ(x)), la longueur du fil de soudure libre, l'angle d'attaque (phi_p(x)) du chalumeau de soudure (3), l'angle de travail (phi_w(x)) du chalumeau de soudure (3) et le point central d'outil (TCP(x)) du chalumeau de soudure (3), est modifié en fonction de l'emplacement (x) le long du chemin de soudure de test (10) à chaque soudure de test.

5. Procédé selon l'une des revendications 1 à 4, **caractérisé en ce que** la soudure de test est réalisée le long de chemins de soudure de test prédéterminés (10) à vecteur tangent (t) constant, en particulier le long de chemins de soudure de test droits (10) d'une longueur (1) de préférence comprise entre 10 cm et 50 cm.

6. Procédé selon l'une des revendications 1 à 5, **caractérisé en ce que** les soudures de test sont réalisées sur des pièces de test (9) planes.

7. Procédé selon l'une des revendications 1 à 6, **caractérisé en ce que** les cordons de soudure de test (11) formés le long du chemin de soudure de test (10) sont mesurés à l'aide de méthodes de mesure non destructives, par exemple des capteurs optiques (13), notamment des scanners laser, caméras ou équivalents, des capteurs à rayons X (14) et/ou des capteurs de température (15), de préférence pendant la réalisation de la soudure de test.

8. Procédé selon l'une des revendications 1 à 7, **caractérisé en ce que** les cordons de soudure d'essai (11) formés le long des chemins de soudure de test (10) sont analysés à l'aide de méthodes de mesure destructives, par exemple en réalisant au moins une micrographie du cordon de soudure de test (11) à au moins une distance prédéterminée (xᵥ) le long du chemin de soudure de test (10).

9. Procédé selon l'une des revendications 1 à 8, **caractérisé en ce qu'**au moins un paramètre de soudure (Pᵢ(x)) est modifié à chaque soudure de test pour passer de la valeur initiale prédéterminée (P_{i,A}) à la valeur finale prédéterminée (P_{i.E}) de manière linéaire en fonction de l'emplacement (x) le long du chemin de soudure de test (10) sur une longueur prédéterminée (1).

10. Procédé selon l'une des revendications 1 à 9, **caractérisé en ce que** les soudures de test sont réalisées dans des conditions de soudure différentes (Bᵢ) et les paramètres de soudure optimaux (P_{i,opt}) pour réaliser la soudure dans une condition de soudure prédéterminée (Bᵥ) sont obtenus par interpolation des paramètres de soudure optimaux (P_{i,opt}) déterminés lors de soudures de test dans des conditions de soudure (Bᵤ, Bₒ) voisines de la condition de soudure prédéterminée (Bᵥ).

11. Procédé selon la revendication 10, **caractérisé en ce que** les soudures de test sont réalisées dans au moins deux conditions de soudure différentes (Bᵢ) comme la température de la pièce, la position de la pièce de test (9), l'angle d'ouverture des pièces de test (9) au niveau du chemin de soudure de test (10) ou la largeur de l'interstice du chemin de soudure de test (10).

12. Procédé selon la revendication 10 ou 11, **caractérisé en ce qu'**avant l'étape d'interpolation, la fonctionnelle de qualité G(Qₖ(Sⱼ(Pᵢ(x)))) est déterminée dans la condition de soudure prédéterminée (Bᵥ) et, si la fonctionnelle de qualité G(Qₖ(Sⱼ(Pᵢ(x)))) s'écarte d'une valeur seuil, au moins une autre soudure de test est réalisée dans une autre condition de soudure (B_{z}).

13. Procédé selon l'une des revendications 1 à 12, **caractérisé en ce que** la largeur, la hauteur, la convexité, la concavité, le volume de remplissage et/ou l'angle de transition du cordon de soudure de test (11) sont mesurés et les paramètres de qualité (Qₖ(Sⱼ(Pᵢ(x)))) sont calculés à partir desdits signaux de capteur (Sⱼ(Pᵢ(x))) le long du chemin de soudure de test (10).

14. Procédé selon l'une des revendications 1 à 13, **caractérisé en ce que** l'optimum de la fonctionnelle de qualité (Gₒₚₜ(Qₖ(Sⱼ(Pᵢ(x))))) est déterminé par modification successive dans chaque cas d'un paramètre de soudure (Pᵢ(x)) pour influer dans chaque cas un paramètre de qualité (Qₖ(Sⱼ(Pᵢ(x))))

15. Procédé selon l'une des revendications 1 à 13, **caractérisé en ce que** l'optimum de la fonctionnelle de qualité (Gₒₚₜ(Qₖ(Sⱼ(Pᵢ(x))))) est déterminé par modification graduelle de plusieurs paramètres de soudure (Pᵢ(x)) pour influer sur plusieurs paramètres de qualité (Qₖ(Sⱼ(Pᵢ(x)))).
